# EUROPEAN PATENT SPECIFICATION

(11) **EP 1 112 156 B1**
(45) Date of publication and mention of the grant of the patent: **23.04.2003**
(21) Application number: 99943146.3
(22) Date of filing: 06.09.1999
(51) Int. Cl.: B29C 33/00, B29C 37/00

(54) **MOULD WITH GASKET AND MOULDING METHOD FOR COMPENSATING CURING SHRINKAGE**
GIESSFORM MIT DICHTUNG UND SCHRUMPFAUSGLEICHVERFAHREN BEIM GIESSFORMEN
MOULE MUNI D'UN JOINT ET PROCEDE DE MOULAGE COMPENSANT LES RETRAITS DUS A LA POLYMERISATION

(30) Priority: 07.09.1998 GB 9819415
(43) Date of publication of application: 04.07.2001
(73) Proprietor: Lucite International UK Limited, Southampton, Hampshire SO14 3BP (GB)
(72) Inventor: ASHTON, David, Piers, Warrington, Cheshire WA1 4DU (GB); OULD, William, John, Blackburn, Lancashire BB1 9NF (GB)
(74) Representative: Brierley, Anthony Paul
(86) International application number: GB9902950
(87) International publication number: WO00013872

(56) References cited:
- EP-A- 0 015 202
- EP-A- 0 271 146
- EP-A- 0 384 545
- EP-A- 0 451 558
- DE-U- 9 115 477
- US-A- 4 143 852
- US-A- 4 227 673
- US-A- 4 693 446
- US-A- 4 839 110
- PATENT ABSTRACTS OF JAPAN vol. 008, no. 028 (M-274), 7 February 1984 (1984-02-07) -& JP 58 187316 A (OLYMPUS KOGAKU KOGYO KK), 1 November 1983 (1983-11-01)

## Description

The present invention relates to a mould which may be used for the curing of curable compositions, i.e. compositions which are supplied to a mould in a flowable condition and which are then cured or hardened by chemical reaction e.g. polymerisation or crosslinking, or by heat or a combination thereof.

Curable compositions often exhibit shrinkage within the mould during the curing process which, if not allowed for, may lead to moulded articles with structural or cosmetic defects. Compensation within the mould to allow for this shrinkage can be effected in a variety of ways.

A fixed cavity mould may be defined as a mould that closes to a fixed and rigid position and is then prevented from or incapable of any further movement. Hence there is no compensation for moulding composition shrinkage during the curing process after the mould has been filled with the curable composition. Shrinkage compensation can be attained by the pressure controlled addition of further amounts of curable composition to this mould during the curing process until the moulded article has set. This is disclosed in GB 1,323,343 which describes a method of producing a thick-walled cured plastics moulding. Alternatively EP 033 3 456 A1 discloses a process of manufacturing a thin-walled plastics moulding, within a fixed cavity mould in which a pre-heated curable composition is added under pressure to the mould, which itself is pre-heated to a higher temperature than the curable composition. Further curable composition is added, via pressure control, to compensate for shrinkage during the curing whilst the temperature of the mould is contralled such that a linear temperature gradient is maintained, increasing away from the entry point of the curable composition. Hence the setting of the composition progresses through the back to the entry point where the further curable composition is added. This provides a thin-walled plastics moulding of an acceptable quality for kitchen sinks.

Alternatively the mould itself may be designed such that it can provide compensation for the shrinkage of the composition during the curing process. One example of a compensating mould comprises at least two pieces separated by a compensating annular rubber gasket positioned at the edge of the mould. The separation of the pieces of the mould can be fixed for injection of the curable material to ensure injection of a similar weight of material each time. As the material cures and starts to shrink the separate pieces of the mould are moved closer together to compensate for this shrinkage. Methods of assisting this compensation include providing pneumatic air bags or hydraulic pistons operating on at least one piece of the mould. A compensating mould of this type may include a flash cavity around the perimeter of the moulding in order to accommodate the fill and venting fixtures. Also it can accommodate any unsightly surface effects on the cured article due from poor heat distribution arising from thermal movements in the mould construction detail. This flash has then to be removed after curing by a trimming process to provide a suitable edge to the moulding. The position on the moulded article where this trimming occurs is commonly referred to as the trim line. The necessity to trim the moulded article is a problem because not only does it waste material it also adds to the post-forming treatment of the cured article and therefore to labour and turnaround time costs.

It is an object of the present invention to provide improvements to a compensating mould which overcome at least some of these problems.

Accordingly the present invention provides a compensating mould comprising a first, obverse face-forming part and a second, reverse face-forming part, said first and second parts being separated by an outer compensating gasket positioned around the edge of the mould characterised by the presence of an inner nett edge gasket comprising an elongate resilient gasket positioned between the first and second mould parts such that the nett edge gasket is in intimate contact with each of the first and second parts of the mould so that in use the nett edge gasket has an external surface positioned next to an edge of a moulding thereby forming a barrier to the flow of flowable curable composition contained within the mould around at least a part of the edge of the mould.

In a second aspect the present invention provides a nett edge gasket comprising a resilient elongate material and a support means adapted to support the resilient elongate material within the flash cavity of a compensating mould. In a third aspect the present invention provides a process for curing a curable material to form a solid cured article in a compensating mould comprising a first, obverse face-forming part and a second, reverse face-forming part, which process comprises the steps of
a) positioning the first and second parts of the mould a fixed distance apart such that they are separated by an outer compensating gasket positioned around the edge of the mould and that a separate inner nett edge gasket is supported between the first and second mould parts in intimate contact with each of the first and second parts of the moulds so that in use the nett edge gasket has an external surface positioned next to an edge of the cured article thereby forming a barrier to the flow of flowable curable composition contained within the mould around at least a part of the edge of the mould,
b) heating the mould parts to a predetermined temperature,
c) introducing a quantity of a flowable curable composition into the space between the parts of the mould,
d) maintaining suitable conditions within the mould to effect curing of the curable composition to form a solid moulded article whilst applying pressure to move the mould pieces closer together to compensate for shrinkage of the composition within the mould,
e) removing the cured article from the mould.

According to a fourth aspect, the present invention provides a compensating mould comprising a flash cavity for receiving a part of a curable composition, a first obverse face-forming part and a second reverse face-forming part, said first and second parts being separated by an outer compensating gasket positioned around the edge of the mould characterised by a separate inner resilient nett edge gasket positioned between the first and second mould parts so that the nett edge gasket is in intimate contact with each of the first and second parts of the mould, wherein the seal between the nett edge gasket and the mould parts forms a barrier to the flow of flowable curable composition contained within the mould into the flash cavity.

The mould comprises a first, obverse face-forming part and a second, reverse face-forming part but each part may be formed from more than one piece which may be secured together and be optionally disassemblable if required. The mould may incorporate integral heating means, e.g. in the form of electric heaters, monitoring devices to measure temperature, pressure etc at one or more places in the mould, mould inserts for forming certain shapes within the mould or changing parts of the shape provided by the mould. The mould also comprises means for introducing the curable composition into the mould in the form of a fill port adapted to enable flowable compositions to be filled into the mould, preferably by pumping. The flowable composition may be added in a predetermined metered amount or may be added until the mould is full. The fill port is preferably located at a part of the mould which Is not critical to the appearance of the moulded article, e.g. on the reverse face-forming part of the mould when the obverse face of the moulded article is intended as the "show-face".

The nett edge gasket is made from a resilient material which is preferably a polymeric material which has some chemical resistance to the curable mixture. Examples of suitable polymers are natural and synthetic rubbers, for example ethylene propylene diene monomer (EPDM), low density polyethylene (LDPE), polyvinylchloride (PVC) and polypropylene (PP). The cross sectional shape of the nett gasket may be for example round, square, rectangular, polygonal and may be solid or hollow. When in use in the mould, an external surface of the nett edge gasket is in contact with an internal surface of each of the two parts of the mould so that the seal between the nett edge gasket and the internal face of the mould prevents the curable composition from flowing into the flash cavity of the mould. In this way, the nett edge gasket enables a moulding to be formed without any (or with only minimal) flash which would otherwise need to be trimmed from the moulding following its release from the mould. The nett edge gasket is preferably positioned within the mould such that an external surface is as close to the trim line as possible around the whate mould. It is preferred that the nett edge gasket is continuous around the mould although it may be interrupted, for example to allow for fill ports, measuring devices or other intrusions into the mould between the two parts of the mould.

In one embodiment the nett edge gasket is supported by direct connection to the internal surface of the mould pieces, for example by means of an adhesive or by fitting a protrusion or socket provided on either the mould or the gasket into a reciprocal protrusion or socket of the other part

In a further embodiment the nett edge gasket is supported by a permanent or temporary support fixture positioned within the flash cavity. Preferably the nett edge gasket is fully supported along its length around the inside of the mould. The support fixture needs to provide support for the nett edge gasket around the inside of the mould to hold the nett edge gasket in the required position, preferably at the trim line, as described above, during the curing process. It may be attached to an inner surface of the mould, for example via an adhesive or bolts or it may be held by a friction fit between the mould parts or between the compensating gasket and the mould. The material of the support may be for example paper based, plastic or metal. The support fixture may be rigid or flexible. The nett edge gasket may be directly connected to the support fixture, for example by means of lugs, screws, or a tongue and channel arrangement whereby a tongue located on one or other of the gasket or support is held within a channel formed in the other part. The tongue may be smooth or may be provided with protrusions or serrations to prevent its inadvertent removal from the channel and thus secure the gasket and support fixture together. In a preferred form, a channel formed along the length of the gasket may be secured around the base of the support fixture to form a snug fit. It is preferred that the nett edge gasket is secured to the support fixture in a manner which enables it to be detached from the support easily when required so that for example a used gasket may be quickly replaced with a new one. In this way only the resilient gasket material needs to be discarded whilst the support fixture may be reused many times. Alternatively the nett edge gasket may be positioned in close proximity to the support fixture so that the gasket and support are not secured together. For example the gasket (or a portion thereof) may be held against the support, e.g. a gasket of 'L' shaped cross section may be positioned as close to the trim line as possible around the mould so that is snugly trapped between the support fixture and one of the mould pieces.

In a further embodiment the support fixture and the nett edge gasket may be a unitary structure made from a resilient material which is preferably a polymeric material which has some chemical resistance to the curable mixture. This type of gasket may be made for example by extrusion of a single, suitably shaped elongate piece of rubbery material, e.g. EPDM rubber and has the advantage that it need not be joined to a separate support fixture. The unitary gasket/support may be provided with means adapted to secure the gasket and support in the desired position within the mould, e.g. holes to accommodate screws or bolts or a flange to fit around a lip within the mould.

The nett edge gasket may remain attached to one of the mould pieces, or the support fixture if present, after the cured article has been removed from the mould. This nett edge gasket could then be reused or alternatively removed from the mould piece, or support fixture if present, and replaced by a new nett edge gasket. Alternatively, the nett edge gasket may be designed to become embedded in the curable composition to form an integral part of the cured moulded article at the trim line so that at least a portion of the resilient material of the gasket forms a part of the moulded article. Moulding processes of the type described are often used to form articles such as kitchen sinks which generally have a gasket attached to them prior to use, in order to form a seal between the article and a kitchen work surface into which the sink is installed. The use of a suitably designed nett edge gasket which is embedded around the edge of the moulded article during moulding may offer the benefit that the gasket is more securely attached to the article than could be achieved by means of an adhesive and of course the manufacturing step of attaching a separate gasket may be avoided. In this form the gasket may be designed with a lip or flange on an inwardly facing portion around which the curable composition may flow when the mould is filled and which therefore becomes embedded in the solid cured article, or alternative means by which the nett edge gasket may be physically secured within the moulded article.

The curable composition may comprise a monomeric compound which is curable within the mould to form a solid polymer. A typical moulding composition for manufacturing kitchen sinks comprises a solution of polymethyl methacrylate in methyl methacrylate monomer to form so-called "syrup" containing a high proportion of a mineral filler, e.g. silica, quartz or alumina trihydrate and optionally colourants and/or other decorative ingredients, impact modifiers, mould release agents, polymerisation initiators, polymerisation regulators, cross-linkers etc. Such compositions are very well known in the art and are described, for example, in GB-A-1493393. Other polymers may be used, e.g. polyesters, polyurethanes etc.

The composition may be cured by the application of heat in a controlled manner. It is common for the mould to be heated in a number of different temperature stages which are normally pre-programmed to provide an ideal heat cycle for the particular composition.

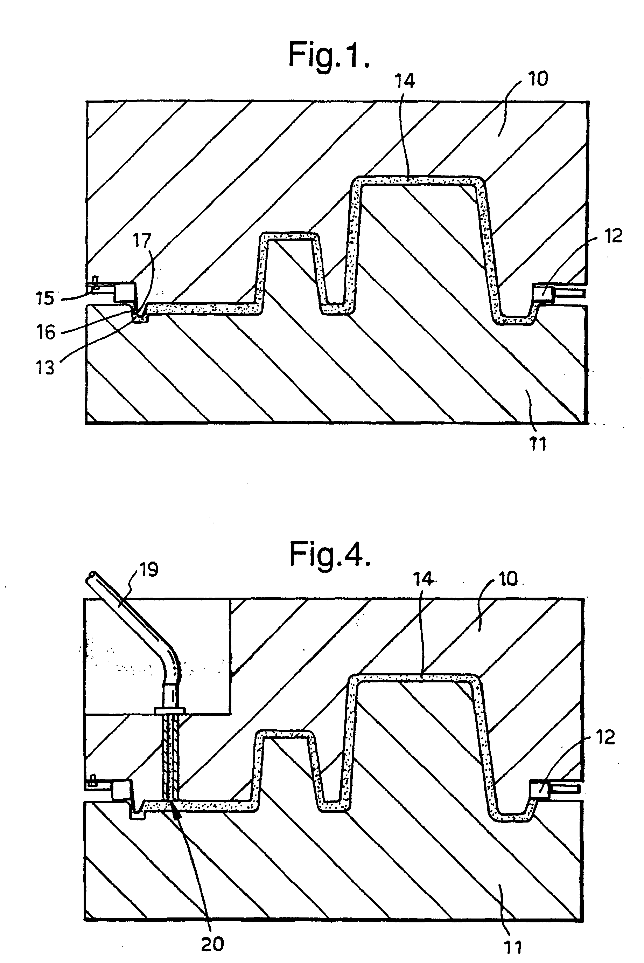

The present invention is further illustrated by reference to the following examples and the accompanying drawings which are each a section through a compensating moulding apparatus for a sink and drainer (Figures 1, 2 , 3 and 4 ).

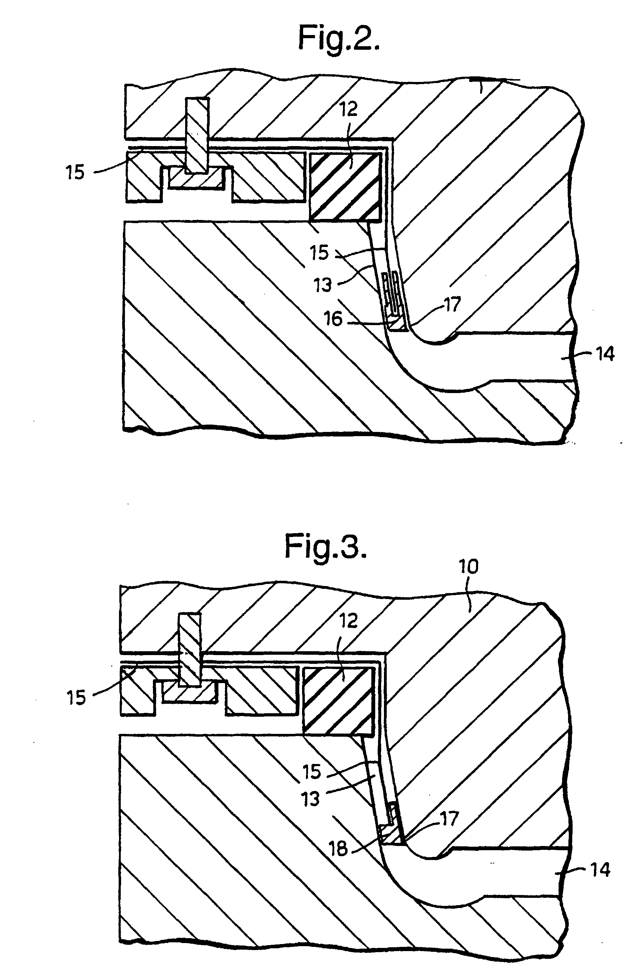

Figure 1 shows two heatable mould pieces, the reverse face forming part (or backface) (10) and the obverse face forming part (or showface) (11). These are separated by an annular EPDM rubber gasket (12). The flash cavity (13) is 30mm high, around the perimeter of the mould. The initiated curable composition (14) is added to the space between the mould pieces. A nett edge gasket (16) which is formed from LDPE is supported on a support fixture (15), which is a rigid aluminium frame positioned within the flash cavity (13). The nett edge gasket (16) is securely but detachably attached to the base of the aluminium frame by means of a serrated channel in the gasket. The nett edge gasket is positioned at the trim line (17) of the mould. Figure 2 shows an exploded view of the nett edge gasket. Figure 4 shows the mould tilted for filling with a filling line (19) and the fill point (20).

In this embodiment (Figure 3) the only difference to Figures 1 and 2 is that the nett edge gasket (18) material is PVC with an L shaped cross section. The base of the L shaped cross section is positioned as dose to the trim line as possible around the whole mould with the nett edge gasket trapped snugly between the rigid aluminium frame (15) and the backface mould piece (10).

### Example 1 Preparation of the initiated curable mixture

A curable mixture was prepared by mixing Ultrastyl™ (a formulated dispersion of methylmethacrylate containing about 60% beta crystobalite filler avaitable from ICI Acrylics) with bis-(4 tertiary butyl cyclohexyl) peroxydicarbonate initiator (0.6% by wt, ex Akzo-Nobel) and stearic acid internal mould release agent (15% by wt) and stirred for 20 minutes. The resulting mixture was de-areated with applied vacuum for 10 minutes.

A mould, substantially as described in the drawings, was prepared by preheating the two mould pieces to 80°C (showface) and 50°C (backface) respectively. The initiated curable mixture was pumped into the mould cavity via a filling line through a low entry point of the backface (as shown in Figure 4) from a dispensing vessel at 1.5 barg pressure. Venting was through a small break in the nett edge gasket which was sealed once the mould cavity was filled as well as the filling line. The compensating pressure was applied to the mould by inflating air bags (not shown) fixed between the upper portion of the mould and a rigid frame surrounding the mould assembly so that when the air bags were inflated, they exerted a downwardly directed pressure on the top portion of the mould so that it is forced towards the lower mould portion, the compensating gasket being able to adapt to the increased pressure to maintain a good seal between the mould portions. The air bags were pressurised to 2.5 barg prior to the start of a 30 minute curing cycle. After 10 minutes the air bag pressure was increased to 4.5 barg and this pressure was maintained for the rest of curing cycle. After 15 minutes of the curing cycle the temperature of each mould piece was increased to 100°C and this temperature was maintained for the remainder of the curing cycle.
The mould pieces were then cooled and the mould opened. The cured article was removed and allowed to cool without dislodging the nett gasket from the support structure.

### Example 2

A curable composition as described in Example 1 was filled into a prepared mould in which an L-shaped PVC nett edge gasket of the type shown in figure 3 was secured against a metal support. When the mould was cooled following the heating cycle, the backface was removed from the cured article first to ensure the PVC nett edge gasket remained secured to the cured article.

## Claims

1. A compensating mould comprising a first, obverse face-forming part (11) and a second, reverse face-forming part (10) said first (11) and second (10) parts being separated by an outer compensating gasket (12) positioned around the edge of the mould **characterised by** the presence of a separate inner nett edge gasket (16,18) comprising an elongate resilient gasket positioned between the first (11) and second (10) mould parts such that the nett edge gasket (16,18) is in intimate contact with each of the first (11) and second (10) parts of the mould so that in use the nett edge gasket (16,18) has an external surface positioned next to an edge (17) of a moulding thereby forming a barrier to the flow of curable composition (14) contained within the mould around at least a part of the edge of the mould.

2. A compensating mould as claimed in claim 1, wherein the nett edge gasket (16,18) is formed from a material selected from a natural or synthetic rubber, low density polyethylene (LDPE), polyvinylchloride (PVC) or polypropylene (PP).

3. A compensating mould as claimed in claim 1 or claim 2, wherein the nett edge gasket (16,18) has a cross sectional shape which is round, square, rectangular or polygonal.

4. A compensating mould as claimed in any of claims 1-3, wherein the nett edge gasket (16,18) is hollow.

5. A compensating mould as claimed in any of claims 1 to 3, wherein the nett edge gasket (16,18) is solid.

6. A mould as claimed in any preceding claim, wherein the nett edge gasket (16,18) comprises means by which it may be physically secured within the moulded article.

7. A mould as claimed in any preceding claim, wherein the nett edge gasket (16,18) is supported on a support fixture (15).

8. A mould as claimed in claim 7, wherein the nett edge gasket (16,18) and support fixture (15) are formed as a unitary article.

9. A compensating mould as claimed in any one of the preceding claims wherein the nett edge gasket (16,18) is continuous around the mould.

10. A compensating mould comprising a flash cavity (13) for receiving a part of a curable composition, a first obverse face-forming part (11) and a second reverse face-forming part (10), said first (11) and second (10) parts being separated by an outer compensating gasket (12) positioned around the edge of the mould **characterised by** a separate inner resilient nett edge gasket (16,18) positioned between the first (11) and second (10) mould parts so that the nett edge gasket (16,18) is in intimate contact with each of the first (11) and second (10) parts of the mould, wherein the seal between the nett edge gasket (16,18) and the mould parts forms a barrier to the flow of flowable curable composition contained within the mould into the flash cavity (13).

11. A nett edge gasket (16,18) comprising a resilient elongate material and a support means (15) adapted to support the resilient elongate material within the flash cavity of a compensating mould.

12. A method for curing material to form a solid cured article, the method comprising the steps of:
a) providing a compensating mould comprising a first, obverse face-forming part (11) and a second, reverse face-forming part (10),
b) positioning the first (11) and second (10) parts of the mould a fixed distance apart such that they are separated by an outer compensating gasket (12) positioned around the edge of the mould and that a separate inner nett edge gasket (16,18) is supported between the first (11) and second (10) mould parts in intimate contact with each of the first (11) and second (10) parts of the mould so that in use the nett edge gasket (16,18) has an external surface positioned next to an edge (17) of the cured article thereby forming a barrier to the flow of flowable curable composition (14) contained within the mould around at least a part of the edge of the mould;
c) heating the mould parts (10,11) to a predetermined temperature;
d) introducing a quantity of flowable curable composition (14) into the space between the parts (10,11) of the mould;
e) maintaining suitable conditions within the mould to effect curing of the curable composition (14) to form a solid moulded article whilst applying pressure to move the mould pieces (10,11) together to compensate for shrinkage of the composition within the mould;
f) removing the cured article from the mould.

13. A method as claimed in claim 12 wherein the flowable curable composition (14) is a filled acrylic composition.

## Patentansprüche

1. Ausgleichende Gießform, umfassend einen ersten vorderflächenbildenden Teil (11) und einen zweiten rückflächenbildenden Teil (10), wobei der erste (11) und der zweite (10) Teil durch eine äußere ausgleichende Dichtung (12), die um die Kante der Gießform angeordnet ist, getrennt sind, **gekennzeichnet durch** das Vorhandensein einer gesonderten inneren Gewebekantendichtung (16, 18), die eine längliche elastische Dichtung umfaßt, die zwischen dem ersten (11) und dem zweiten (10) Gießformteil angeordnet ist, so daß die Gewebekantendichtung (16, 18) in engem Kontakt mit jeweils dem ersten (11) und dem zweiten (10) Teil der Gießform steht, so daß die Gewebekantendichtung (16, 18) bei der Verwendung eine neben einer Kante (17) eines Formteils angeordnete äußere Oberfläche aufweist, wodurch sie eine Absperrung gegen den Fluß der innerhalb der Gießform enthaltenen härtbaren Zusammensetzung (14) um zumindest einen Teil der Kante der Gießform bildet.

2. Ausgleichende Gießform nach Anspruch 1, wobei die Gewebekantendichtung (16, 18) aus einem Material gebildet ist, das aus Naturkautschuk, synthetischem Kautschuk, Polyethylen niederer Dichte (LDPE), Polyvinylchlorid (PVC) oder Polypropylen (PP) gewählt wird.

3. Ausgleichende Gießform nach Anspruch 1 oder Anspruch 2, wobei die Gewebekantendichtung (16, 18) eine Querschnittsform aufweist, die rund, quadratisch, rechteckig oder vieleckig ist.

4. Ausgleichende Gießform nach einem der Ansprüche 1 bis 3, wobei die Gewebekantendichtung (16, 18) hohl ist.

5. Ausgleichende Gießform nach einem der Ansprüche 1 bis 3, wobei die Gewebekantendichtung (16, 18) fest ist.

6. Gießform nach einem der vorhergehenden Ansprüche, wobei die Gewebekantendichtung (16, 18) Mittel umfaßt, durch die sie physisch innerhalb des gießgeformten Gegenstands befestigt werden kann.

7. Gießform nach einem der vorhergehenden Ansprüche, wobei die Gewebekantendichtung (16, 18) auf einer Haltevorrichtung (15) gehalten wird.

8. Gießform nach Anspruch 7, wobei die Gewebekantendichtung (16, 18) und die Haltevorrichtung (15) als ein einheitlicher Gegenstand ausgebildet sind.

9. Ausgleichende Gießform nach einem der vorhergehenden Ansprüche, wobei die Gewebekantendichtung (16, 18) um die Gießform herum fortlaufend ist.

10. Ausgleichende Gießform, umfassend eine Aushöhlung (13) für überfließendes Material zum Aufnehmen eines Teils einer härtbaren Zusammensetzung, einen ersten vorderflächenbildenden Teil (11) und einen zweiten rückflächenbildenden Teil (10), wobei der erste (11) und der zweite (10) Teil durch eine äußere ausgleichende Dichtung (12), die um die Kante der Gießform angeordnet ist, getrennt sind, **gekennzeichnet durch** eine gesonderte innere elastische Gewebekantendichtung (16, 18), die zwischen dem ersten (11) und dem zweiten (10) Gießformteil angeordnet ist, so daß die Gewebekantendichtung (16, 18) in engem Kontakt mit jeweils dem ersten (11) und dem zweiten (10) Teil der Gießform steht, wobei die Abdichtung zwischen der Gewebekantendichtung (16, 18) und den Gießformteilen eine Absperrung gegen den Fluß der innerhalb der Gießform enthaltenen fließfähigen härtbaren Zusammensetzung in die Aushöhlung (13) für überfließendes Material bildet.

11. Gewebekantendichtung (16, 18), umfassend ein elastisches längliches Material und ein Haltemittel (15), das dafür ausgelegt ist, das elastische längliche Material innerhalb der Aushöhlung für überfließendes Material einer ausgleichenden Gießform zu halten.

12. Verfahren zum Härten von Material zum Bilden eines festen gehärteten Gegenstands, wobei das Verfahren folgende Schritte umfaßt:
a) Bereitstellen einer ausgleichenden Gießform, umfassend einen ersten vorderflächenbildenden Teil (11) und einen zweiten rückflächenbildenden Teil (10);
b) um einen festgelegten Abstand voneinander getrenntes Anordnen des ersten (11) und des zweiten (10) Teils der Gießform, so daß sie durch eine äußere ausgleichende Dichtung (12), die um die Kante der Gießform angeordnet ist, getrennt sind, und daß eine gesonderte innere Gewebekantendichtung (16, 18) in engem Kontakt mit jeweils dem ersten (11) und dem zweiten (10) Teil der Gießform zwischen dem ersten (11) und dem zweiten (10) Gießformteil gehalten wird, so daß die Gewebekantendichtung (16, 18) bei der Verwendung eine neben einer Kante (17) des gehärteten Gegenstands angeordnete äußere Oberfläche aufweist, wodurch sie eine Absperrung gegen den Fluß der innerhalb der Gießform enthaltenen fließfähigen härtbaren Zusammensetzung (14) um zumindest einen Teil der Kante der Gießform bildet;
c) Erhitzen der Gießformteile (10, 11) auf eine vorherbestimmte Temperatur;
d) Einleiten einer Menge einer fließfähigen härtbaren Zusammensetzung (14) in den Raum zwischen den Teilen (10, 11) der Gießform;
e) Aufrechterhalten geeigneter Bedingungen innerhalb der Gießform, um ein Härten der härtbaren Zusammensetzung (14) zu bewirken, um einen festen gießgeformten Gegenstand zu bilden, während Druck ausgeübt wird, um die Gießformteile (10, 11) zueinander zu bewegen, um das Schrumpfen der Zusammensetzung innerhalb der Gießform auszugleichen;
f) Entfernen des gehärteten Gegenstands aus der Gießform.

13. Verfahren nach Anspruch 12, wobei die fließfähige härtbare Zusammensetzung (14) eine gefüllte Acrylzusammensetzung ist.

## Revendications

1. Moule de compensation comprenant une première pièce formant la face recto (11) et une deuxième pièce formant la face verso (10), lesdites première (11) et deuxième (10) pièces étant séparées par une garniture de compensation externe (12), positionnée autour du bord du moule, **caractérisé par** la présence d'une garniture de bord net interne séparée (16, 18), comprenant une garniture tenace allongée, positionnée entre la première (11) et la deuxième (10) pièces de moule de telle sorte que la garniture de bord net (16, 18) soit en contact intime avec chacune des première (11) et deuxième (10) pièces du moule, de telle sorte qu'au cours de l'utilisation, la garniture de rebord net (16, 18) ait une surface externe positionnée à proximité d'un bord (17) d'un moulage, en formant ainsi une barrière à l'écoulement de la composition durcissable (14), contenue au sein du moule, autour d'au moins une partie du bord du moule.

2. Moule de compensation selon la revendication 1, **caractérisé en ce que** la garniture de bord net (16, 18) est formée d'un matériau sélectionné parmi le caoutchouc naturel ou le caoutchouc synthétique, le polyéthylène basse densité (LDPE), le chlorure de polyvinyle (PVC) ou le polypropylène (PP).

3. Moule de compensation selon la revendication 1, ou la revendication 2, **caractérisé en ce que** la garniture de bord net (16, 18) a une forme en section transversale qui est ronde, carrée, rectangulaire ou polygonale.

4. Moule de compensation selon l'une quelconque des revendications 1-3, **caractérisé en ce que** la garniture de bord net (16, 18) est creuse.

5. Moule de compensation selon l'une quelconque des revendications 1-3, **caractérisé en ce que** la garniture de bord net (16, 18) est solide.

6. Moule de compensation selon l'une quelconque des revendications précédentes, **caractérisé en ce que** la garniture de bord net (16, 18) comprend un moyen grâce auquel elle peut être fixée physiquement au sein de l'article moulé.

7. Moule selon l'une quelconque des revendications précédentes, **caractérisé en ce que** la garniture de bord net (16, 18) est supportée sur une attache de support (15).

8. Moule selon la revendication 7, **caractérisé en ce que** la garniture de bord net (16, 18) et l'attache de support (15) sont formés sous la forme d'un article unique.

9. Moule de compensation selon l'une quelconque des revendications précédentes, **caractérisé en ce que** la garniture de bord net (16, 18) est continue autour du moule.

10. Moule de compensation comprenant une cavité d'ébavurage (13) pour la réception d'une partie d'une composition durcissable, une première pièce formant la face recto (11) et une deuxième pièce formant la face verso (10), lesdites première (11) et deuxième (10) pièces étant séparées par une garniture de compensation externe (12), positionnée autour du bord du moule, **caractérisée par** une garniture de bord net tenace interne séparée (16, 18), positionnée entre la première (11) et la deuxième (10) pièces du moule, de telle sorte que la garniture de bord net (16, 18) soit en contact intime avec chacune des première (11) et deuxième (10) pièces du moule, **caractérisé en ce que** le joint d'étanchéité, entre la garniture de bord net (16, 18) et les pièces du moule, forme une barrière à l'écoulement de la composition durcissable capable d'écoulement, contenue au sein du moule vers la cavité d'ébavurage (13).

11. Garniture de bord net (16, 18), comprenant un matériau allongé tenace et un moyen de support (15) adapté au support du matériau allongé tenace au sein de la cavité d'ébavurage du moule de compensation.

12. Procédé de durcissement d'un matériau pour former un article solide durci, le procédé comprenant les étapes :
a) de mise à disposition d'un moule de compensation comprenant une première pièce formant la face recto (11) et une deuxième pièce formant la face verso (10) ;
b) de positionnement des première (11) et deuxième (10) pièces du moule à une distance fixe l'une de l'autre, de telle sorte qu'elles soient séparées par une garniture de compensation externe (12), positionnée autour du bord du moule et qu'une garniture de bord net interne séparée (16, 18) soit supportée entre les première (11) et deuxième (10) pièces du moule en contact intime avec chacune des première (11) et deuxième (10) pièces du moule, de telle sorte, qu'au cours de l'utilisation, la garniture de bord net (16, 18) ait une surface externe positionnée à proximité d'un bord (17) de l'article durci, en formant ainsi une barrière à l'écoulement de la composition durcissable, capable d'écoulement (14), contenue au sein du moule autour d'au moins une partie du bord du moule ;
c) de chauffage des pièces du moule (10, 11) à une température prédéterminée ;
d) d'introduction d'une quantité de composition durcissable capable d'écoulement (14) dans l'espace entre les pièces (10, 11) du moule ;
e) de maintien de conditions appropriées au sein du moule pour effectuer le durcissement de la composition durcissable (14) pour former un article moulé solide tout en appliquant une pression pour déplacer ensemble les pièces du moule (10, 11) pour compenser le retrait de la composition au sein du moule ;
f) de retrait de l'article durci du moule.

13. Procédé selon la revendication 12, **caractérisé en ce que** la composition durcissable capable d'écoulement (14) est une composition acrylique chargée.
